# EUROPÄISCHE PATENTSCHRIFT

(11) **EP 1 559 647 B1**
(45) Veröffentlichungstag und Bekanntmachung des Hinweises auf die Patenterteilung: **28.03.2007**
(21) Anmeldenummer: 04029920.8
(22) Anmeldetag: 17.12.2004
(51) Int. Cl.: B64D 11/06, B60N 2/427, B60R 21/055

(54) **Sitz, insbesondere Fluggastsitz**
Seat, particularly aircraft passenger seat.
Siège, en particulier siège pour passager d'avion

(30) Priorität: 30.01.2004 DE 102004004874
(43) Veröffentlichungstag der Anmeldung: 03.08.2005
(73) Patentinhaber: Recaro Aircraft Seating GmbH & Co. KG, 74523 Schwäbisch Hall (DE)
(72) Erfinder: Frey, Andreas, 88090 Immenstaad (DE)
(74) Vertreter: Bartels & Partner

(56) Entgegenhaltungen:
- EP-A- 0 847 917
- WO-A-97/20707
- WO-A-03/084811
- DE-A1- 10 019 484
- US-A- 5 836 547

## Beschreibung

Die Erfindung betrifft einen Sitz, insbesondere Fluggastsitz, mit einem Sitz-und einem Rückenlehnenteil, die zumindest teilweise aus Schalenteilen aufgebaut sind, gemäß der Merkmalsausgestaltung des Oberbegriffes des Patentanspruches 1.

Dahingehende Fluggast- oder Passagiersitze sind in einer Vielzahl von Ausführungsformen bekannt und diese unterliegen sehr hohen Sicherheitsstandards und werden insbesondere in sog. Crash-Versuchen dynamisch getestet. Bei den dahingehenden Tests muß ein sog. HIC-Wert (Head Impact Criteria) von 1000 unterschritten werden, um die Sicherheit des Sitzbenutzers im Crashfall zu gewährleisten. Um die Rentabilität von Flügen sicherstellen zu können, wird insbesondere in der Economy-Class der Abstand zwischen den einzelnen Sitzreihen entsprechend reduziert, mit der Folge, dass es im Crashfall nicht mehr ausgeschlossen werden kann, dass ein Sitzbenutzer sich an den rückwärtigen Sitzkomponenten eines vorangehend angeordneten Fluggastsitzes stößt. Um nun die dahingehenden Bereiche des Sitzes sicher zu gestalten, ist bei den bekannten Lösungen vorgesehen, dass dieser rückwärtige Bereich so elastisch ausgestaltet wird, dass beim zu erwartenden Aufschlag keine wesentlichen, den Sitzbenutzer schädigenden Kräfte entstehen. Es hat sich jedoch bei den genannten dynamischen Tests gezeigt, dass dahingehende Lösungen nur bedingt geeignet sind, den Sitzbenutzer im Crashfall vor Verletzungen zu schützen.

Ein moderner Fluggastsitz der neuesten Generation ist beispielhaft in der DE 100 19 484 der Anmelderin beschrieben. Die bekannte Lösung betrifft einen Fluggastsitz mit einem Sitzteil und einer Rückenlehne, die über mindestens eine Einstelleinrichtung relativ zueinander bewegbar gehalten sind, wobei die jeweilige Einstelleinrichtung mehrere Gelenkstellen aufweist, die zumindest teilweise über ein Stabtragwerk mit einzelnen Stabteilen miteinander verbunden sind, das das Sitzteil gegenüber einem Fahrzeug- oder Kabinenboden aufständert. Mittels einer Betätigungseinrichtung üben die Komponenten des Fluggastsitzes derart Einstellbewegungen aus, dass das Sitzteil aus einer Ausgangsposition in mindestens eine weitere Position oder umgekehrt bringbar ist. Neben dem Sitzteil sind auch die weiteren Komponenten des Sitzes, wie Fuß- und Beinauflage sowie Rückenlehne, derart in einer Vielzahl von Bewegungsfreiheitsgraden einstellbar, dass neben verschiedenen Komfortpositionen eine Ruheposition für den Sitzbenutzer erreicht ist, bei der die Rückenlehne über eine Zwangsführung bedingt durch eine Schwenkbewegung des Stabtragwerkes der Neigung des Sitzteiles derart nachfolgt, dass eine schräg verlaufende Ruhefläche für den Sitz realisiert ist. Dahingehende Sitze werden vorzugsweise in der First-Class sowie der Business-Class eingesetzt.

Zwar werden zur Komforterhöhung heute zusehends zumindest teilweise Komponenten dahingehender First- und Business-Class-Sitzer auf die Economy-Bestuhlung übertragen; dennoch sind hier aus Platzersparnis- sowie Kostengründen die Lösungen von ihren Komforteinstellungen her in der Regel einfacher gehalten.

Durch die EP-A-0 847 917 ist ein gattungsgemäßer Sitz, nämlich Fluggastsitz bekannt, mit einem Sitzteil und einem Rücklehnenteil, die zumindest teilweise aus Schalenteilen aufgebaut sind, wobei zumindest ein Schalenteil mit den sonstigen Teilen des Sitzes über eine Festlegeeinrichtung derart lösbar verbunden ist, dass bei einer schlagartigen Krafteinleitung, wie, beispielsweise im Crashfall, sich das Schalenteil von den sonstigen Teilen des Sitzes löst. Bei der bekannten Lösung ist das Rückenlehnenteil zweiteilig ausgebildet und besteht aus einem im Crashfall nach vorne schwenkbaren Rückenlehnenpolster, das über Verbindungsmittel, wie Klettenhaftverschlüsse oder dergleichen, im üblichen Gebrauchszustand lösbar mit einem Schalenteil verbindbar ist, das als Bauteil mit geringer Masse und aufgebaut aus schockabsorbierenden Materialien sich dünnwandig über den gesamten rückwärtigen Bereich des Rückenlehnenpolsters erstreckt; also vom Bereich des Sitzbodens ausgehend bis zu dem Kopfstützenbereich ragt. Dadurch, dass das eigentliche Rückenlehnenpolster im Crashfall nach vorne weg schwenkt, mag zwar der in Längsreihe rückwärtig Sitzende aufgrund der geringen Masse des am Ort verbleibenden Schalenteiles vor einer möglichen Verletzungsgefahr entlastet sein; allein der in der Reihe vorwärtig Sitzende wird in seiner Vorwärtsklappbewegung vom Rückenlehnenpolster noch unterstützt, was insoweit zu einer Erhöhung der Verletzungsgefahr für diesen Sitzbenutzers wiederum mit beitragen dürfte. Auch wenn das dünnwandige Rücken-Schalenteil beim Auftreffen des Kopfes eines Sitzbenutzers dem nur einen geringen Widerstand entgegensetzen mag, kann dieser dennoch ausreichen, um zu erheblichen Verletzungen beim Sitzbenutzer zu führen.

Ausgehend von diesem Stand der Technik liegt der Erfindung die Aufgabe zugrunde, die bekannten Sitzlösungen dahingehend weiter zu verbessern, dass Sitze geschaffen sind, bei denen ein HIC-Wert von 1000 unterschritten wird und die im Crashfall in der Lage sind, den jeweiligen Sitzbenutzer vor Verletzungen zu schützen. Eine dahingehende Aufgabe löst ein Sitz, insbesondere Fluggastsitz, mit den Merkmalen des Patentanspruches 1 in seiner Gesamtheit.

Dadurch, dass gemäß dem kennzeichnenden Teil des Patentanspruches 1 das Schalenteil im Querschnitt gesehen keilförmig ausgebildet ist und dass seine flächenförmige Ausdehnung derartig gewählt ist, dass insbesondere der Kopf eines in der nachfolgenden Sitzreihe sitzenden Sitzbenutzers bei einem etwaigen Aufprall im Crashfall sicher auffangbar ist, ist gewährleistet, dass bei einer schlagartigen Krafteinleitung, wie beispielsweise im Crashfall, sich das im Querschnitt gesehen keilförmig ausgebildete Schalenteil von den sonstigen Teilen des Sitzes löst, so dass über das dahingehende Schalenteil eine Art passives Element realisiert ist, das bei normalen Betriebskräften, also im normalen Betriebszustand des Sitzes, Position und Form beibehält; aber bei großen Kraftimpulsen, wie bei einer schlagartigen Krafteinleitung im Crashfall, einen Freiraum im Sitz schafft, sich also von der sonstigen Schalenstruktur des Sitzes löst, ohne dass dabei wesentliche Reaktionskräfte erzeugt werden, die gegebenenfalls schädigend auf den Sitzbenutzer einwirken könnten.

Das keilförmige Schalenteil ist insbesondere in seiner Ausdehnung derart groß dimensioniert, dass beim Aufschlagen von Teilen des Kopfes des in der nachfolgenden Sitzreihe sitzenden Sitzbenutzers bei einem etwaigen Aufprall im Crashfall dieser sicher aufgefangen wird, oder bei Überschreiten von vorgebbaren Kräften sich von der sonstigen Schalenstruktur wie dargelegt löst.

Die erfindungsgemäße Lösung ist also derart konzipiert, dass bei einem etwaigen Aufschlag sich das keilförmige Schalenteil als entsprechendes Strukturteil des Sitzes von diesem löst, ohne dass jedoch durch die Lösung des Struktur- oder Schalenteiles eine zusätzliche Gefährdung für den Passagier bzw. den Sitzbenutzer ausgeht.

Bei einer bevorzugten Ausführungsform des erfindungsgemäßen Sitzes weist dabei das Schalenteil, das vorzugsweise im wesentlichen als Hohlschale ausgebildet ist, an seiner Oberseite einen Schaumrand auf, so dass beim Auftreffen des Kopfes des Sitzbenutzers das Schaumteil elastisch nachgibt und dergestalt einen Aufprallschutz ausbildet, wobei neben der Schockabsorption durch den Schaum eine Ablösung des Schalenteils von den sonstigen Schalenkomponenten des Sitzes stattfindet. Praktische dynamische Tests haben dabei gezeigt, dass auch bei ungünstigen Auftreffwinkeln jedenfalls ein Head Impact Criteria (HIC)-Wert von 1000 ohne weiteres unterschritten werden kann. Aufgrund des schockabsorbierenden Schaumes im Randbereich des Schalenteils ist darüber hinaus sichergestellt, dass bei allen auftretenden Aufschlagwinkeln das Schalenteil ausweichen und sich von der sonstigen Sitzstruktur lösen kann.

Weitere vorteilhafte Ausführungsformen des erfindungsgemäßen Sitzes sind Gegenstand der sonstigen Unteransprüche.
Die erfindungsgemäße Lösung braucht auch nicht auf Fluggastsitze beschränkt zu sein; sondern sie kann vielmehr auch in sonstigen Fahrzeugbereichen, wie Omnibussen, Fährschiffen od. dgl., Anwendung finden.

Im folgenden wird der erfindungsgemäße Sitz anhand eines Ausführungsbeispiels nach der Zeichnung näher erläutert.

Dabei zeigen in prinzipieller und nicht maßstäblicher Darstellung die
- Fig.1: einen Teil der rückwärtigen Ansicht auf die Grundstruktur eines Fluggastsitzes;
- Fig.2: von der gegenüberliegenden Vorderseite her das in der Fig. 1 verwendete Schalenteil;
- Fig.3: einen Mittenlängsschnitt längs des oberen Bereiches der Rükkenlehne mit Schalenteil gemäß der Darstellung nach der Fig.1 mit eingesetztem Bildschirm.

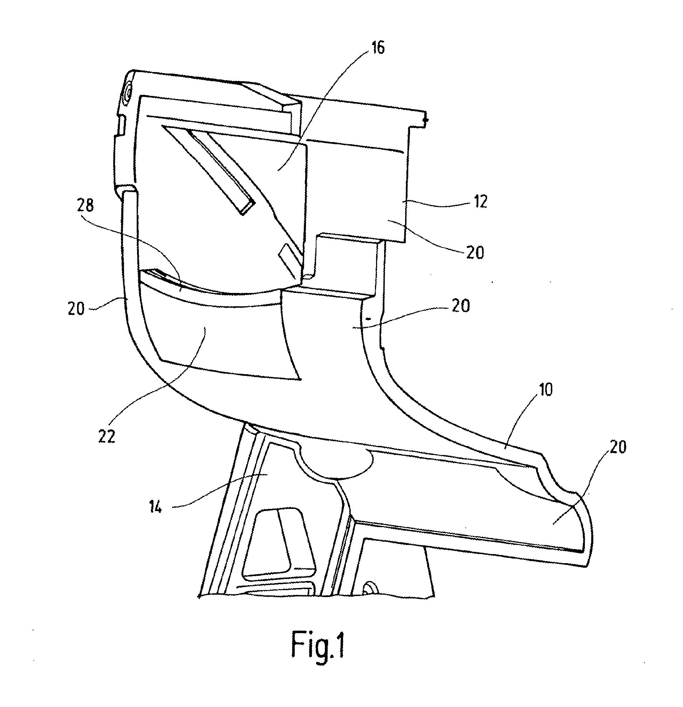

Der grundsätzliche Aufbau eines Economy-Sitzes ist beispielhaft in der Fig.1 von seinem grundsätzlichen Struktur-Aufbau her wiedergegeben. Auch hier verfügt der Sitz über ein Sitzteil 10, das nach oben hin in ein Rückenlehnenteil 12 übergeht. Auch hier ist das Rückenlehnenteil 12 in vorgebbarem Rahmen gegenüber dem Sitzteil 10 zur Komforterhöhung in seinen Neigungen von einem Sitzbenutzer einstellbar. Ferner sind die genannten Teile 10, 12 über ein Ständerteil 14 gegenüber eine Kabinen- oder Fahrzeugboden (nicht dargestellt) aufständerbar.

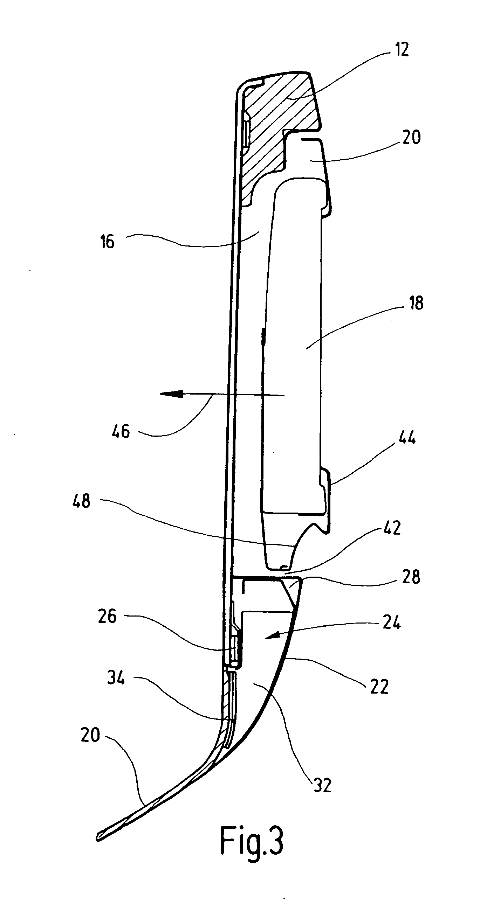

Das Rückenlehnenteil 12 gemäß der Darstellung nach der Fig.1 weist in seinem oberen Bereich einen Ausschnitt 16 auf, der der Aufnahme eines Bildschirmes 18 dient, wie er in einer seitlichen Schnittdarstellung in der Fig.3 wiedergegeben ist. Die dahingehende Integration von Bildschirmen 18 ist beispielhaft von der Bestuhlung eines ICE-Zuges od. dgl. bekannt. Wie sich des weiteren aus den Fig.1 und 3 ergibt, ist der gezeigte Sitz zumindest teilweise aus Schalenteilen 20 aufgebaut. Eines 22 der Schalenteile 20 erstreckt sich gemäß der bildlichen Darstellung nach der Fig.1 im mittigen Bereich des Rückenlehnenteils 12 quer zu dessen Längsausrichtung und ist zwischen den holmenartigen Schalenteilen 20 des Rückenlehnenteils 12 in dieses integriert, wobei zumindest im rückwärtigen Bereich ein bündiger Abschluß zwischen den benachbarten Schalenteilen 20 und dem mittig eingesetzten Schalenteil 22 besteht. Das genannte Schalenteil 22 ist mit den sonstigen Teilen des Sitzes über eine als Ganzes mit 24 bezeichnete Festlegeeinrichtung derart mit diesem lösbar verbunden, dass bei einer schlagartigen Krafteinleitung, wie beispielsweise im Crashfall, sich das genannte Schalenteil 22 von den sonstigen Teilen 26 des Sitzes löst.

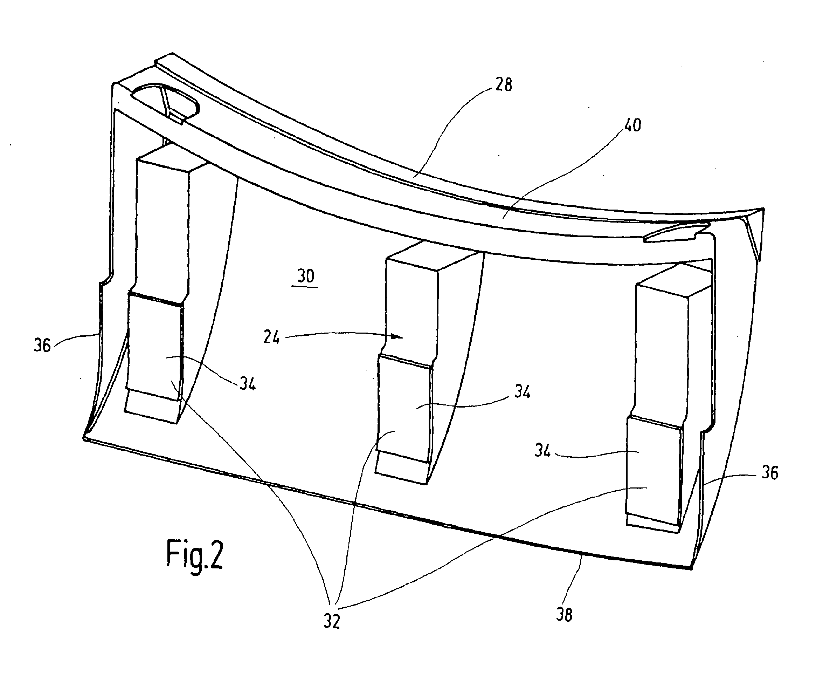

Wie sich des weiteren aus der Fig.1 ergibt, ist das Schalenteil 22 in das Rückenlehnenteil 12 integriert und dergestalt Bestandteil desselben, wobei das Schalenteil 22 im normalen Gebrauch des Sitzes Form und Position beibehält. Wie sich des weiteren aus den Fig.2 und 3 ergibt, ist das Schalenteil 22 im Querschnitt gesehen im wesentlichen keilförmig ausgebildet, wobei seine flächenförmige Ausdehnung in Längs- und Querrichtung des Rückenlehnenteils 12 derart gewählt ist, dass insbesondere der Kopf eines in der nachfolgenden Sitzreihe (nicht dargestellt) sitzenden Sitzbenutzers bei einem etwaigen Aufprall im Crashfall sicher auffangbar ist.

Insbesondere haben dynamische Aufprallversuche gezeigt, dass mit einem Auftreffen von Gesichtsteilen im oberen Bereich, also an der oberen Kante 28 des Schalenteils 22, zu rechnen ist. Die dahingehend obere Kante 28 ist in der Art eines gepolsterten Randes ausgebildet oder selbst mit einem Schaumstoffrand versehen, was es ermöglicht, dass bei allen möglicherweise auftretenden Aufschlagswinkeln des Kopfes eines Sitzbenutzers das Schalenteil 22 nach Lösen der Festlegeeinrichtung 24 nach unten hin ausweichen und sich von der sonstigen Sitzstruktur mit ihren Schalenteilen 20 lösen kann. Dergestalt schafft aber das Schalenteil 22 bei den im Crashfall auftretenden großen Kraftimpulsen einen Freiraum im rückwärtigen Bereich des Sitzes, so dass die Auftreffkräfte und die mögliche Verletzungsgefahr für den Sitzbenutzer deutlich reduziert sind. Das Schalenteil 22 ist dabei derart ausgebildet und von der genannten Sitzstruktur lösbar, dass dabei keine wesentlichen Reaktionskräfte auftreten können, die gegebenenfalls für den Sitzbenutzer ein weiteres Schädigungspotential beinhalten könnten. Auch kann durch das Lösen des Schalenteils 22 keine Gefährdung durch lose Teile verursacht werden, da vorzugsweise das Schalenteil 22 mit der sonstigen Sitzstruktur über eine elastische Folie (nicht dargestellt) verbunden ist, die gegebenenfalls von weiteren Polsterteilen oder Bezugsmaterialien überdeckt wird.

Wie sich des weiteren aus den Fig. 2 und 3 ergibt, ist das Schalenteil 22 im Querschnitt gesehen keilförmig und im übrigen in der Art einer Hohlschale ausgebildet, wobei sich im dahingehenden Hohlraum 30 drei Versteifungsstege 32 befinden für eine Anlage mit den rückwärtigen sonstigen Teilen 26 des Rückenlehnenteils 12. Zwei der jeweiligen Versteifungsstege sind im randseitigen Bereich des Schalenteils 22 angeordnet und ein Versteifungssteg 32 dazwischenliegend im mittigen Bereich des Schalenteils 22. Der jeweilige Versteifungssteg orientiert sich in vertikaler Richtung innerhalb des Hohlraumes 30 und weist nach unten hin einen gestuften Absatz 34 auf. Der dahingehend gestufte Absatz 34 schließt insoweit zumindest im rückwärtigen Bereich bündig mit dem jeweils zuordenbaren Seitenrand 36 des Schalenteils 22 ab. An dem Absatz 34 kann frontseitig ein Klebstoffband oder ein Teil eines Haftbandverschlusses (Klettenhaftverschluß) angeordnet sein, um dergestalt eine lösbare Verbindung mit den zugeordneten Teilen 26 der als Ganzes mit 24 bezeichneten Festlegeeinrichtung einzugehen.

Der in Blickrichtung auf die Fig.2 gesehen untere Rand 38 des Schalenteils 22 ist im wesentlichen in einer horizontalen Ebene verlaufend ausgerichtet, wohingegen die obere Kante 28 in Form des Schaumstoffrandes eine konkave Vertiefung 40 aufweist. Die dahingehend konkave Vertiefung 40 ist unter anderem aus ergonomischen Gesichtspunkten vorgesehen, um dergestalt eine günstige mögliche Auftrefffläche für den Kopfbereich des Sitzbenutzers zu schaffen und bildet insoweit auch einen günstigen Übergangsbereich 42 aus im Hinblick auf die konvex ausgestaltete Unterseite des Bildschirmes 18. Der dahingehende Bildschirm 18 ist um einen vorgebbaren Schwenkbereich beweglich im oberen Schalenteil 20 des Rückenlehnenteils 12 angelenkt und im Crashfall bei einem etwaigen Auftreffen einer Kopffläche auf den als Prallplatte 44 ausgebildeten unteren Teil des Bildschirmes 18 wird dieser in Pfeilrichtung 46 in Richtung auf den rückwärtigen Bereich des Rückenlehnenteils 12 rückverschwenkt und über die gebogen verlaufende Führungsfläche 48 ist dann eine Auftreffmöglichkeit auf die obere Kante 28 des Schalenteils 22 geschaffen.

Die genannte Festlegeeinrichtung 24 kann als Verbindungsmittel auch über eine leicht lösbare Kleb- oder Rastverbindung (nicht dargestellt) verfügen oder der Halt des Schalenteils 22 an den sonstigen Strukturteilen wird ausschließlich über die elastisch nachgiebige Abdeckfolie realisiert. Das Schalenteil 22 kann aus einem dünnen Kunststoffmaterial gebildet sein; besteht vorzugsweise jedoch selbst aus einem elastisch nachgiebigen Material, beispielsweise aus einem entsprechenden Formschaummaterial.

Mit der erfindungsgemäßen Schalenlösung, bestehend aus einem Keil, das aber auch aus einem sonstigen Bauteil bestehen könnte, wird über dessen Breite die potentielle Aufschlagzone für den rückwärtigen Sitzbenutzer abgedeckt. Dadurch, dass der Keil lösbar mit der Primärstruktur des Sitzes verbunden ist und von einer elastischen Verkleidungsfolie abgedeckt wird, verhält sich der Keil in Richtung der Beschleunigungsachse und quer dazu zunächst wie die feste Struktur des Sitzes. Nach unten hin kann der Keil aufgrund seiner Ausgestaltung jedoch mit wenig Kraft verschoben werden, so dass er zwischen Folie und Primärstruktur gehalten wird und somit beim Aufprall keine wesentlichen Kräfte erzeugen kann und keine Gefährdung durch lose Teile entsteht.

## Patentansprüche

1. Sitz, insbesondere Fluggastsitz, mit einem Sitzteil (10) und einem Rükkenlehnenteil (12), die zumindest teilweise aus Schalenteilen (20) aufgebaut sind, wobei zumindest ein Schalenteil (22) mit den sonstigen Teilen (26) des Sitzes über eine Festlegeeinrichtung (24) derart lösbar verbunden ist, dass bei einer schlagartigen Krafteinleitung, wie beispielsweise im Crashfall, sich das Schalenteil (22) von den sonstigen Teilen (26) des Sitzes löst, **dadurch gekennzeichnet, dass** das Schalenteil (22) im Querschnitt gesehen keilförmig ausgebildet ist und dass seine flächenförmige Ausdehnung derart gewählt ist, dass insbesondere der Kopf eines in der nachfolgenden Sitzreihe sitzenden Sitzbenutzers bei einem etwaigen Aufprall im Crashfall sicher auffangbar ist.

2. Sitz nach Anspruch 1, **dadurch gekennzeichnet, dass** das Schalenteil (22) in das Rückenlehnenteil (12) integriert und Bestandteil desselben ist und dass das Schalenteil (22) im normalen Gebrauch des Sitzes Form und Position beibehält.

3. Sitz nach Anspruch 1 oder 2, **dadurch gekennzeichnet, dass** das Schalenteil (22) im wesentlichen als Hohlschale ausgebildet ist und dass sich im dahingehenden Hohlraum (30) Versteifungsstege (32) befinden für eine Anlage mit den rückwärtigen Teilen (26) des Rückenlehnenteils (12).

4. Sitz nach Anspruch 3, **dadurch gekennzeichnet, dass** der jeweilige Versteifungssteg (32) sich in vertikaler Richtung innerhalb des Hohlraumes (30) erstreckt und zumindest teilweise bündig mit einem Seitenrand (36) des Schalenteils (22) abschließt.

5. Sitz nach einem der Ansprüche 1 bis 4, **dadurch gekennzeichnet, dass** die Keilspitze des Schalenteils (22) sich in Richtung des Sitzteils (10) erstreckt und dass der nach oben zur Kopfstütze hinweisende Bereich (Kante 28) des Keiles einen gepolsterten Rand oder einen Schaumstoffrand aufweist.

6. Sitz nach einem der Ansprüche 1 bis 5, **dadurch gekennzeichnet, dass** das Schalenteil (22) im rückwärtigen Bereich des als Rückenlehnenschale ausgebildeten Rückenlehnenteils (12) bündig in diesen übergeht und in seiner Lage mittels einer vorzugsweise elastischen Abdeckfolie und/oder eines sonstigen Bezugsstoffes gehalten ist.

7. Sitz nach Anspruch 6, **dadurch gekennzeichnet, dass** als Festlegeeinrichtung (24) mindestens ein Haftbandverschluß und/oder eine Clip- oder Rastverbindung und/oder eine Klebstoffverbindung und/oder die Abdeckfolie und/oder der Bezugsstoff dient.

8. Sitz nach einem der Ansprüche 1 bis 7, **dadurch gekennzeichnet, dass** das Schalenteil (22) im Rückenlehnenteil (12) unterhalb eines Bildschirms (18) angeordnet ist und dass der untere Rand (48) des um einen vorgebbaren Winkel schwenkbaren Bildschirmes (18) in den oberen Randbereich (Kante 28) des Schalenteils (22) übergeht.

9. Sitz nach einem der Ansprüche 1 bis 8, **dadurch gekennzeichnet, dass** das Schalenteil (22) selbst aus elastisch nachgiebigen Materialien besteht, vorzugsweise aus einem Formschaummaterial.

## Claims

1. Seat, in particular with a seat part (10) and a back rest part (12), being constructed at least in part of shell components (20), whereby at least one shell component (22) is disconnectably connected with the remaining components (26) of the seat via an affixing means (24) in such a way that the shell component (22) separates from the remaining components (26) of the seat during a sudden application of force such as for example in a crash situation, **characterised in that** the cross-section of the shell component (22) is wedge shaped, and **in that** its spatial expansion is selected in such a way that in particular the head of a seat user sitting in a subsequent row can be safely caught following a possible impact during a crash situation.

2. Seat according to Claim 1, **characterised in that** the shell component (22) is integrated into the back rest part (12) and forms a part of the same, and **in that** the shell component (22) retains its shape and position during normal operation of the seat.

3. Seat according to Claim 1 or 2, **characterised in that** the shell component (22) substantially takes the form of a hollow shell, and **in that** reinforcement bridges (32) for an abutment against the rear components (26) of the back rest part (12) are located within the said hollow space (30).

4. Seat according to Claim 3, **characterised in that** the relevant reinforcement bridge (32) extends in a vertical direction within the hollow space (30), and ends at least partially flush with a side edge (36) of the shell component (22).

5. Seat according to one of the Claims 1 to 4, **characterised in that** the wedge tip of the shell component (22) extends in the direction of the seat component (10), and **in that** the area (edge 28) of the wedge pointing in an upward direction towards the head rest comprises an upholstered edge or a foam edge.

6. Seat according to one of the Claims 1 to 5, **characterised in that** the shell component (22) in the rear area of the back rest part (12) forming the back rest shell transforms into the same and is held in its position by means of a preferably elastic covering foil and/or another covering material.

7. Seat according to Claim 6, **characterised in that** at least one adhesive tape closure and/or one clip or arresting closure and/or one adhesive closure and/or the covering foil and/or the covering foil and/or the covering material serves as the affixing means (24).

8. Seat according to one of the Claims 1 to 7, **characterised in that** the shell component (22) is located in the back rest part (12) below a monitor (18), and **in that** the lower edge (48) of the monitor (18) that can be tilted at a pre-determined angle transforms into the upper edge area (edge 28) of the shell component (22).

9. Seat according to one of the Claims 1 to 8, **characterised in that** the shell component (22) itself consists of elastically yielding materials, preferably of a shaped foam material.

## Revendications

1. Siège, en particulier siège pour passager d'avion, comprenant une partie assise (10) et une partie dossier (12) qui sont constituées, du moins partiellement, de parties d'enveloppe (20), au moins une partie d'enveloppe (22) étant reliée de façon désolidarisable aux autres parties (26) du siège au moyen d'un dispositif de fixation (24), de manière que dans le cas d'une brusque application de forces, par exemple lors d'un accident, la partie d'enveloppe (22) se détache des autres parties (26) du siège, **caractérisé en ce que**, vue en coupe transversale, la partie d'enveloppe (22) est réalisée en forme de coin et **en ce que** son étendue planiforme est choisie de telle manière qu'en particulier la tête d'un utilisateur du siège, assis dans la rangée suivante de sièges, puisse être amortie de manière fiable en cas d'éventuel choc lors d'un accident.

2. Siège selon la revendication 1, **caractérisé en ce que** la partie d'enveloppe (22) est intégrée dans la partie dossier (12) et fait partie de celle-ci et **en ce que** la partie d'enveloppe (22) conserve sa forme et sa position lors d'une utilisation normale du siège.

3. Siège selon la revendication 1 ou 2, **caractérisé en ce que** la partie d'enveloppe (22) est réalisée dans une large mesure sous forme d'enveloppe creuse et **en ce que** des nervures de renforcement (32) se trouvent dans un espace creux (30) correspondant pour une mise en appui avec les parties arrière (26) de la partie dossier (12).

4. Siège selon la revendication 3, **caractérisé en ce que** chaque nervure de renforcement (32) s'étend en direction verticale à l'intérieur de l'espace creux (30) et est délimitée, du moins partiellement, par et en affleurement avec un bord latéral (36) de la partie d'enveloppe (22).

5. Siège selon l'une des revendications 1 à 4, **caractérisé en ce que** la pointe du coin de la partie d'enveloppe (22) s'étend dans la direction de la partie assise (10) et **en ce que** la zone (bord 28) du coin, tournée vers le haut par rapport à l'appuie-tête, présente un bord rembourré ou un bord en mousse synthétique.

6. Siège selon l'une des revendications 1 à 5, **caractérisé en ce que** la partie d'enveloppe (22), située dans la zone arrière de la partie dossier (12) réalisée en tant qu'enveloppe de dossier, se transforme en celle-ci à affleurement et est maintenue dans sa position au moyen d'une feuille de recouvrement de préférence élastique et/ou d'un autre matière de revêtement.

7. Siège selon la revendication 6, **caractérisé en ce qu'**au moins une fermeture auto-agrippante et/ou une liaison par clip ou par encliquetage et/ou une liaison adhésive et/ou la feuille de recouvrement et/ou la matière de revêtement sert/servent de dispositif de fixation (24).

8. Siège selon l'une des revendications 1 à 7, **caractérisé en ce que** la partie d'enveloppe (22) située dans la partie dossier (12) est disposée au-dessous d'un écran (18) et **en ce que** le bord inférieur (48) de l'écran (18), pouvant pivoter selon un angle prédéfini, se transforme en la zone de bordure (bord 28) supérieure de la partie d'enveloppe (22).

9. Siège selon l'une des revendications 1 à 8, **caractérisé en ce que** la partie d'enveloppe (22) est elle-même constituée de matériaux déformables élastiquement, de préférence d'un matériau à base de mousse moulée.
